# EUROPEAN PATENT SPECIFICATION

(11) **EP 1 932 731 B1**
(45) Date of publication and mention of the grant of the patent: **03.08.2011**
(21) Application number: 07010179.5
(22) Date of filing: 22.05.2007
(51) Int. Cl.: B60R 22/12

(54) **Webbing for passenger restraint belt, seat belt, and seat belt device**
Gurtband für Passagier-Rückhaltegurt, Sicherheitsgurt und Sicherheitsgurtvorrichtung
Sangle pour ceinture de protection du passager, ceinture de sécurité et dispositif de ceinture de sécurité

(30) Priority: 11.12.2006 JP 2006333601
(43) Date of publication of application: 18.06.2008
(73) Proprietor: TAKATA CORPORATION, Minato-ku, Tokyo 106-8510 (JP)
(72) Inventor: Shimazaki, Sadayuki, Tokyo 106-8510 (JP); Tabayashi, Itsuo, Tokyo 106-8510 (JP)
(74) Representative: Banzer, Hans-Jörg

(56) References cited:
- EP-A- 1 134 313
- EP-A- 1 790 762
- JP-A- 2004 315 984

## Description

The present invention relates to a technique for forming a passenger restraint belt used for restraining a passenger when a vehicle accident occurs.

### Background Art

A conventional technique for forming this type of passenger restraint belt has been described, for example, in Japanese Unexamined Patent Application Publication No. 2004-315984. In this Patent Document, as for a seat belt for use as a long passenger restraint belt restraining a vehicle passenger, the possibility of forming a seat belt having superior compactness and comfort by improving filament yarn bundles used for the seat belt, woven configuration of the bundles and the like has been disclosed.

### Problems to be Solved by the Invention

When this type of seat belt is designed, a basic property, that is, rigidity capable of restraining a passenger in the case of a vehicle accident, is required, and in addition, in consideration of the comfort when a seat belt is worn as disclosed in the above Japanese Unexamined Patent Application Publication No. 2004-315984 and properties of withdrawing a seat belt from a retractor, reduction in weight of a long seat belt is also desired. Accordingly, in order to reduce the weight of a seat belt, it is conceived that the number of filaments forming the seat belt is reduced. By a method for simply reducing the number of filaments, the reduction in weight can be achieved; however, on the other hand, the decrease in rigidity may become a concern which is caused by the reduction in number of filaments, and as a result, the essential basic property of restraining a passenger may not be sufficiently obtained in some cases. Further, in consideration of the transportation of this type of seat belt, it is desired to form a passenger restraint belt of which the property of a filament yarn is hardly affected by high temperature conditions during transportation.

From EP 1 790 762 A2, which constitutes state of the art only under Art. 54(3) EPC, a webbing for a passenger restraint belt comprising warp yarns and weft yarns is known. The warp yarns and the weft yarns are composed of synthetic filaments which are woven so as to extend orthogonally to each other. In this webbing, at least either one of the weft yarns and the warp yarns are synthetic filaments composed of first filaments and second filaments provided therebetween, the second filaments having a melting temperature lower than that of the first filaments, and the synthetic filaments being formed using high shrinking synthetic filaments which are contracted at a dimensional shrinkage rate of 20% to 60% after the second filaments are melted under conditions of 150°C or more for 180 seconds or more. The webbing has a weight of 60 g/m or less, a tensile strength of 25 kN or more, and a retention rate after hexagonal bar abrasion of 70% or more.

Accordingly, the present invention has been conceived in consideration of the problem described above, and an object of the present invention is to provide an effective technique to simultaneously achieve the increase in strength and the reduction in weight of a passenger restraint belt which is installed in a vehicle. In addition, it is another object of the present invention to provide a passenger restraint belt suitable for transportation in which the property of a filament yarn is hardly changed under the high temperature conditions during transportation.

### Means for Solving the Problems

According to the invention, these objects are achieved by a webbing for a passenger restraint belt as defined in claim 1, a seat belt as defined in claim 4, and a seat belt device as defined in claim 5. The dependent claims define preferred and advantageous embodiments of the invention.

To this end, the present invention was made. Accordingly, the present invention may be applied to a technique for forming a seat belt or a safety belt, which is used as means for restraining a passenger in a vehicle such as an automobile.

The webbing for a passenger restraint belt of the present invention is used as a passenger restraint belt such as a long seat belt which is retracted or withdrawn by a seat belt retractor or a safety belt of an air plane. This webbing for a passenger restraint belt is formed as a webbing in which warp yarns (vertical yarns) and weft yarns (horizontal yarns), both of which are made of synthetic filaments, are woven to extend orthogonally to each other.

In particular, in the webbing for a passenger restraint belt according to the present invention, at least either one of the weft yarns and warp yarns are formed using synthetic filaments composed of first filaments and second filaments. The second filaments are provided in the first filaments and have a melting temperature lower than that of the first filaments. The synthetic filaments are middle shrinking synthetic filaments which are contracted at a dimensional shrinkage rate of less than 20% and more than 15% after the second filaments are melted under conditions of 150°C or more for 180 seconds or more. The state in which the second filaments are provided in the first filaments includes the state in which the second filaments are substantially evenly dispersed between the first filaments or the state in which the second filaments are unevenly scattered in the first filaments. The middle shrinking synthetic filaments are called "middle shrinking type synthetic filaments" or "middle shrinking yarns" which have a middle dimensional shrinkage rate of less than 20% and more than 15%. In addition, in the present invention, the case in which the warp yarns or the weft yarns are formed using the middle shrinking synthetic filaments and the case in which the warp yarns and the weft yarns are both formed using the middle shrinking synthetic filaments may be included. In this case, the warp yarns and/or the weft yarns may be partly or entirely formed using middle shrinking synthetic filaments. As the middle shrinking synthetic filaments, in particular, polyester-based filaments may be used. The dimensional shrinkage rate of filaments, such as the warp yarns and the weft yarns, that is, the degree of shrinkage in the longitudinal direction, can be represented by the following equation, ((length after process - length before process])/length after process)× 100, the lengths being obtained before and after the process performed under the above process conditions. This dimensional shrinkage rate can be obtained using a process method or a measurement method in accordance with, for example, JIS L 1013.

In the webbing for a passenger restraint belt, according to the present invention, when at least either one of the warp yarns and the weft yarns are formed using middle shrinking synthetic filaments having a dimensional shrinkage rate of 15% to 20%, and when the webbing is heated in accordance with the above process conditions, the second filaments having a low melting point of the middle shrinking synthetic filaments are preferentially melted, and shrinkage and convergence of the warp yarns and/or the weft yarns occur in the longitudinal direction. As a result, the cross-sectional area of a filament yarn material of the warp yarns and/or the weft yarns after the shrinkage is increased, and the hardness is increased, so that the rigidity of the webbing is increased as a whole. Hence, corresponding to the increase in rigidity of the webbing formed using yarns containing middle shrinking synthetic filaments, the weight can be decreased by reducing the number of the warp yarns and/or the weft yarns. Consequently, a webbing for a passenger restraint belt having a weight of 60g/m or less, a tensile strength of 25 kN or more, and a retention rate after hexagonal bar abrasion of 70% or more can be obtained, so that a passenger restraint belt having both rigidity and lightweight properties can be provided. In this case, the tensile strength (intensity) of the webbing can be measured by a method in accordance with JIS D4604 method, and the retention rate after hexagonal bar abrasion of the webbing can be measured by a method in accordance with JIS D4604 method.

In addition, in consideration of the transportation of a passenger restraint belt, it is desired to form the belt of which the property of a filament yarn is hardly affected by high temperature conditions during transportation. The webbing for a passenger restraint belt of the present invention is effective in forming a passenger restraint belt suitable for transportation in which the property of a filament yarn is hardly changed under the high temperature conditions during transportation because the shrinking of the filament yarn is limited.

Further, the webbing for a passenger restraint belt of the embodiment according to the present invention has the structure in which the weft density is set to 20 picks per inch or less in the aforementioned webbing for a passenger restraint belt.

In a cross-sectional structure of this type of webbing, the warp yarns are extended to form a curved shape, a so-called "crimping (undulating phenomenon)", in contrast to the weft yarns which are linearly extended. This is a particular phenomenon caused by a weaving method (woven structure) in which the weft yarns are woven between warp yarns which are shed alternately. In the structure as described above, when the weft density is set to 20 picks per inch or less and preferably set to 17 picks per inch or less, the degree of meanderings of the curved crimped shape can be decreased, and stress concentrated on curved portions can be alleviated. As a result, in order to simultaneously achieve the increase in strength of webbing and the reduction in weight thereof, the properties can be further improved.

In the webbing for a passenger restraint belt of an embodiment according to the present invention, in addition, at least either one of the warp yarns and the weft yarns are formed using a filament yarn material made of twist yarns or a filament yarn material made of entangled non-twist yarns. The present invention includes the case in which the warp yarns or the weft yarns are formed using a filament yarn material made of twist yarns or a filament yarn material made of entangled non-twist yarns and the case in which the warp yarns and the weft yarns are both formed using a filament yarn material made of twist yarns or a filament yarn material made of entangled non-twist yarns. By using the filament yarn material as described above, since the entanglement among the filaments is increased, and the cohesion is enhanced, the rigidity of the webbing can be further improved. In particular, when the filament yarn material made of entangled non-twist yarns is used, a material cost can be reduced as compared to that in the case in which the filament yarn material made of twist yarns is used, and as a result, a production cost of the webbing for a passenger restraint belt can also be reduced.

A seat belt of the present invention is a passenger restraint belt for restraining a vehicle passenger and formed using the aforementioned webbing for a passenger restraint belt. According to the structure as described above, the increase in strength of the seat belt and the reduction in weight thereof can be achieved at the same time. In addition, it is possible to provide a seat belt suitable for transportation in which the property of a filament yarn is hardly changed under the high temperature conditions during transportation.

A seat belt device of the present invention comprises at least the aforementioned seat belt, a seat belt retractor, a buckle, and a tongue. The seat belt retractor has a function of retracting and withdrawing the seat belt and has a spool which is received in a retractor housing. This seat belt retractor may have a drive mechanism to drive the spool and a control mechanism to control this drive. In addition, the tongue provided for the seat belt is configured to be engaged with the buckle fixed to a vehicle when the seat belt is worn. According to the structure described above, a seat belt device can be provided in which the increase in strength of the seat belt and the reduction in weight thereof are achieved at the same time. In addition, the seat belt device can be provided with a seat belt suitable for transportation in which the property of a filament yarn is hardly changed under the high temperature conditions during transportation.

### Advantages

As described above, according to the present invention, in the webbing for a passenger restraint belt in which the warp yarns and the weft yarns, both of which are made of synthetic filaments, are woven so as to extend orthogonally to each other, at least either one of the warp yarns and the weft yarns are formed using middle shrinking synthetic filaments, so that a technique effective to simultaneously obtain the increase in strength of a passenger restraint belt, the reduction in weight thereof and the improvement in the transportation performance can be provided.

### Brief Description of the Drawings

Fig. 1 is a view showing a schematic structure of a seat belt device 100 of an embodiment according to the present invention.
Fig. 2 is a table showing weaving conditions and webbing properties of webbings for a seat belt forming a seat belt 110 shown in Fig. 1, the webbings being formed in this embodiment ("example") and a comparative example.
Fig. 3 is a schematic view showing a low-melting-point polyester filament (middle shrinking yarn) of this embodiment.

### Best Mode for Carrying Out the Invention

Hereinafter, one embodiment of the present invention will be described in detail with reference to the figures.

This embodiment relates to a seat belt device installed in an automobile and proposes an optimum seat belt forming the seal belt device and a manufacturing method of the seat belt.

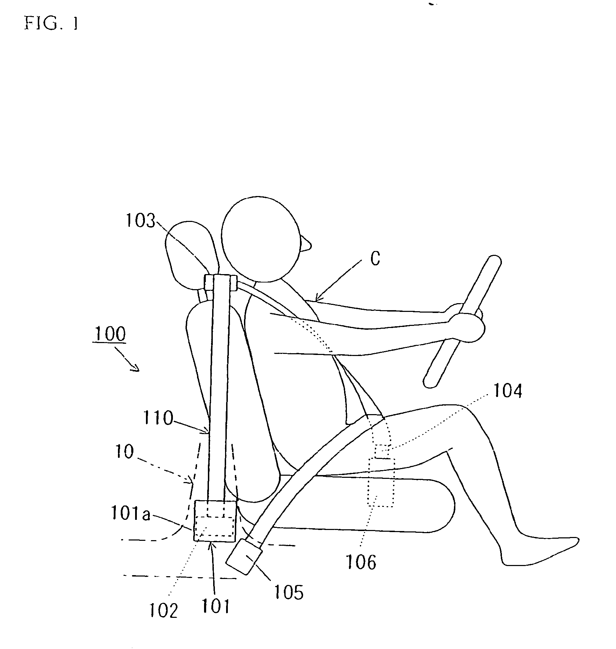

First, with reference to Fig. 1, the structure of a seat belt device 100, which is one embodiment of the "seat belt device" of the present invention, will be described. Fig. 1 shows a schematic structure of the seat belt device 100 of this embodiment according to the present invention.

As shown in Fig. 1, the seat belt device 100 of this embodiment is a seat belt device for a vehicle, which is installed in a vehicle, and is primarily composed, for example, of a seat belt retractor 101, a seat belt 110, a tongue 104, and a buckle 106.

The seat belt retractor 10 1 of this embodiment has the structure in which at least a tubular spool 102 is received in a retractor housing 101a, and retracting and withdrawing of the seat belt 110 can be performed with this spool 102. This spool 102 is driven by driving means formed using a spring, a motor, or the like. According to the example shown in Fig. 1, this seat belt retractor 101 is arranged in an accommodation space of a B-pillar 10 of the vehicle. This seat belt retractor 101 corresponds to the "seat belt retractor" of the present invention.

The seat belt 110 of this embodiment is a long belt to restraint a vehicle passenger C or to release the restraint and is a belt formed from a long belt-shaped member (webbing) made of a synthetic filament yarn material. This seat belt 110 corresponds to the "passenger restraint belt", that is, the "seat belt", of the present invention. This seat belt 110 is withdrawn from the seat belt retractor 101 which is fixed to the vehicle and is connected to an outer anchor 105 via a shoulder guide anchor 103 provided in a passenger shoulder part region of the vehicle passenger C and the tongue 104. In addition, when the tongue 104 is inserted into (engaged with) the buckle 106 which is fixed to the vehicle, the seat belt 110 is in a seat belt wearing state for the vehicle passenger C. This tongue 104 corresponds to the "tongue" of the present invention, and the buckle 106 corresponds to the "buckle" of the present invention.

In order to form a seat belt which is excellent for practical use, the inventors of the present invention wove a webbing for a seat belt in accordance with predetermined weaving conditions which will be described later, and webbing properties of the webbing for a seat belt were evaluated. This webbing for a seat belt corresponds to the "webbing for a passenger restraint belt" of the present invention.

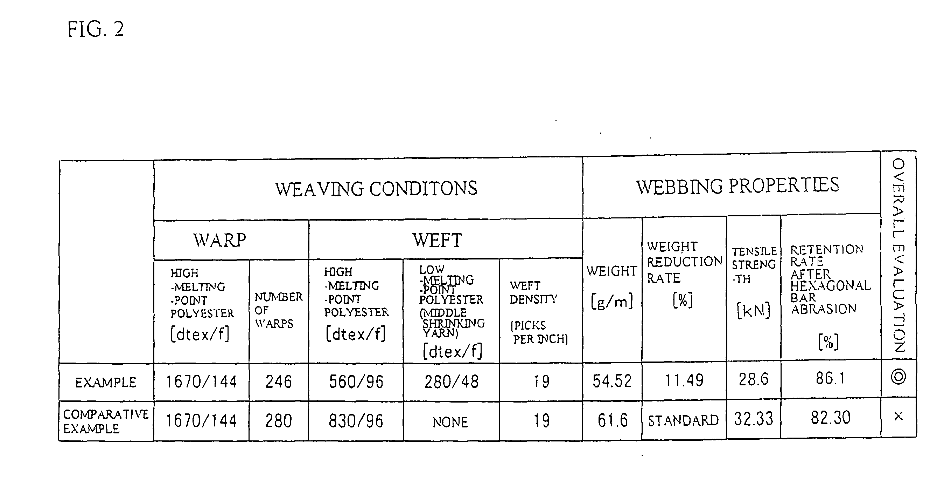

The weaving conditions of the webbing for a seat belt forming the seat belt 110 shown in Fig. 1 and the webbing properties of an example of this embodiment and a comparative example are shown in Fig. 2. The webbing for a seat belt of the example of this embodiment and the comparative example are each formed as a fabric in which vertical yarns (also called "warp yarns") and horizontal yarns (also called "weft yarns"), both of which are formed from synthetic filaments, are woven so as to extend orthogonally to each other. In particular, in the example of this embodiment, middle shrinking yarns in the longitudinal direction of filaments are used as the weft yarns. In the comparative example, the middle shrinking yarns are not used as the weft yarns.

As shown in Fig. 2, in "example", a filament yarn bundle of warp yarns each consisting of 144 filaments having a dtex of 1670, which was a weight-reduced filament yarn bundle obtained by reducing 34 warp yarns from a normal product (in which the number of warp yarns was 280), was used as a first filament yarn bundle. By this reduction, the number of the warp yarns was decreased to 246. As the first filament yarn bundle, a yarn material made of entangled non-twist yarns was used. In addition, as a second filament yarn bundle, weft yarns were used which were formed from high-melting-point polyester filaments each consisting of 96 filaments having a dtex of 560 and low-melting- point polyester filaments each consisting of 12 filaments having a dtex of 84, that is, middle shrinking yarns having a thermal shrinkage rate of 20% under process conditions of 150°C for 30 minutes (which are filaments corresponding to the "middle shrinking synthetic filaments" of the present invention). This shrinkage rate is the degree of shrinkage of the filaments in the longitudinal direction and corresponds to the "dimensional shrinkage rate" of the present invention. As the middle shrinking yarn, a yarn which has a thermal shrinkage rate of 15% to 20%, that is a yarn which has a middle dimensional shrinkage rate of less than 20% and more than 15%, under process conditions of 150°C or more for 180 seconds or more may be optionally selected.

As for blending for the weft yarns between the high-melting-point polyester filaments and the low-melting-point polyester filaments, for example, one high-melting-point polyester filament consisting of 96 filaments having a dtex of 560 and one low-melting-point polyester filaments (middle shrinking yarns) each consisting of 12 filaments having a dtex of 84 (48 filaments having a dtex of 280) may be blended together.

As the high-melting-point polyester filaments forming the weft yarns, typically, a polymer material of polyethylene terephthalate is used which is manufactured by an esterification reaction using terephthalic acid and ethylene glycol. In addition, as the low-melting-point polyester filaments (middle shrinking yarn) forming the weft yarns, typically, a copolymer material of the above polythyleneterephthalate and polyethylene isophthalate, which is manufactured by an esterification reaction using terephthalic acid, isophthalic acid, and ethylene glycol, is used.

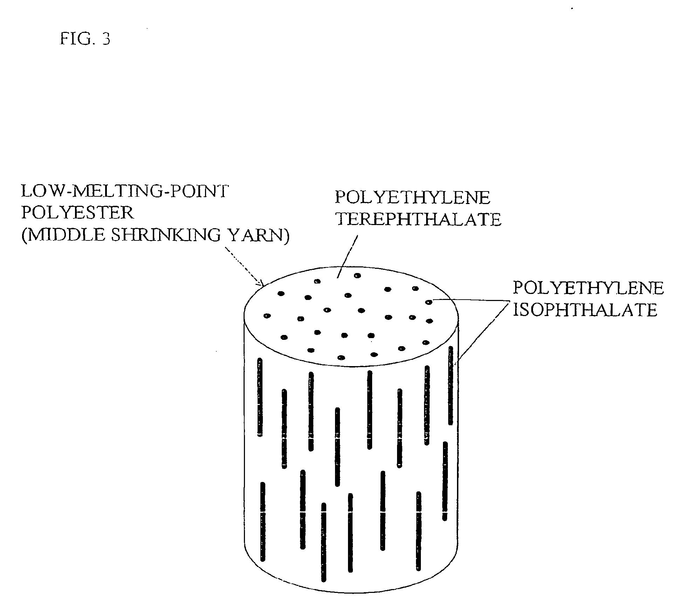

A schematic view of the low-melting-point polyester filament (middle shrinking yarn) of this embodiment is shown in Fig. 3. As shown in Fig. 3, this low-melting-point polyester filament has the structure in which polyethylene isophthalate is dispersed in polyethylene terephthalate. That is, this low-melting-point polyester filament has the structure in the form of a copolymer in which polyethylene isophthalate having a low melting point is mixed in polyethylene terephthalate having a high melting point. In this embodiment, a filament yarn material, which is a bundle composed of the low-melting-point polyester filaments (monofilaments) and which is a so-called multifilament, is used as some of the weft yarns. When a webbing formed from the weft yarns as described above is heated, the polyethylene isophthalate (low-melting-point filaments) having a low melting point relative to that of the polyethylene terephthalate is preferentially melted, monofilaments are melted together, and as a result, shrinkage and convergence occur. Hence, when multifilaments adjacent to each other form a monofilament by convergence, the hardness is increased. As a result, the cross-sectional area of a filament material after the shrinkage of the weft yarns is increased, and the hardness is increased, so that the rigidity of the webbing is increased as a whole. The "first filaments" of the present invention correspond to the high-melting-point polyester filaments. The "second filaments" of the present invention correspond to (the combination of) the high-melting-point polyester filaments and the low-melting-point polyester filaments. The high-melting-point polyester filaments comprise the polyethylene terephthalate. The low-melting-point polyester filaments comprise the polyethylene terephthalate and the polyethylene isophthalate.

In this low-melting-point polyester filament, as a copolymerization ratio of polyethylene isophthalate, that is, the amount thereof, is increased, the melting point of the filament yarn is decreased. For example, when the copolymerization ratio of polyethylene isophthalate is 10% (that is, the ratio of polyethylene terephthalate is 90%), the melting point of the low-melting-point polyester filament is set to 230°C, and when the copolymerization ratio of polyethylene isophthalate is 30% (that is, the ratio of polyethylene terephthalate is 70%), the melting point of the low-melting-point polyester filament is set to 160°C. In this embodiment, a low-melting-point polyester filament having a copolymerization ratio of polyethylene isophthalate of 10% and a melting point of 230°C is used as the middle shrinking yarn.

Next, the first filament yarn bundles and the second filament yarn bundles of "example" were woven by a needle type loom in accordance with the weaving conditions shown in Fig. 2, so that a webbing for a seat belt (webbing for evaluation) was obtained. In this weaving, the weft density was set to 19 picks per inch. Subsequently, after a dyeing process and a pre-drying process were performed for the webbing for evaluation whenever necessary, a heat stabilization process was performed. In this heat stabilization process, the webbing for evaluation was passed through a heating furnace at a controlled temperature of approximately 150°C for approximately 30 minutes. The conditions for this heat stabilization process may be optionally selected from the range in which the temperature is 150°C or more and the time is 180 seconds or more. For example, process conditions of 150°C for 180 seconds or process conditions of 150°C for 5 minutes may also be selected. Furthermore, when the webbing properties shown in Fig. 2 were measured, after the webbing for evaluation was cut into a test piece having a predetermined size, followed by spontaneous drying, the test piece was exposed under predetermined constant temperature and humidity conditions (20°C and 65% RH).

In "example", for example, by the reduction in number of the warp yarns performed to obtain the first filament yarn bundle, the weight per unit length of the entire webbing for a seat belt was 54.52 g/m, and the weight reduction rate was 11.49%.

On the other hand, in "comparative example", a filament yarn bundle of warp yarns each consisting of 144 filaments having a dtex of 1670, in which the number of the warp yarns is normal (280 warp yarns), was used as the first filament yarn bundle. As this first filament yarn bundle, a yarn material made of entangled non-twist yarns was used. In addition, as the second filament yarn bundle, a filament yarn bundle of weft yarns each consisting of 96 filaments having a dtex of 830 and containing no middle shrinking yarns, which were used in "example", was used, and the weft density for the second filament yarn bundle was set to 19 picks per inch.

In this comparative example, the weight per unit length of the entire webbing for a seat belt was 61.60 g/m, and this weight was defined as a weight-reduction standard.

For evaluation of the webbing properties, items shown below were measured for the webbings for a seat belt of "example" and the comparative example by the inventors of the present invention, the webbings being formed in accordance with the weaving conditions described above. By the inventors of the present invention, for every measurement item, at least 5 test pieces were prepared from each of the webbings, and the repeatability was confirmed from the measurement results.

### Measurement Items

In this embodiment, as the measurement items for evaluating the webbing properties of the webbing for a seat belt, "tensile strength (also called "intensity" or "strength") and "retention rate after hexagonal bar abrasion" were used.

### Measurement of Intensity

In this embodiment, the tensile strength (intensity) of the webbing was measured by a method in accordance with JIS D4604 method. When the tensile strength of this webbing is designed so as to be 25 kN or more, desired load bearing characteristics required for a seat belt can be obtained.

### Measurement of Retention Rate after Hexagonal Bar Abrasion

In this embodiment, the retention rate after hexagonal bar abrasion of the webbing was measured by a method in accordance with JIS D4604 method. When this webbing is designed to have the retention rate after hexagonal bar abrasion of, for example, 70% or more, a desired abrasion resistance required for a seat belt can be obtained.

### Evaluation Items

Next, the inventors of the present invention evaluated the webbings for a seat belt of "example" and the comparative example based on the above measurement results. As the evaluation items, "lightweight properties", "strength", "abrasion resistance" and the like were used.

As shown in Fig. 2, the webbing of "example" has a weight reduction rate of 11.49% based on the result of the comparative example by reduction of 34 warp yarns for forming the first filament yarn bundle, and hence it is confirmed that this webbing is exceptionally superior in terms of the lightweight properties. In addition, although the other evaluation items, that is, the tensile strength and the hexagonal anti-abrasion resistance, are slightly inferior to those of the comparative example, both of them satisfy the respective predetermined levels, that is, a tensile strength of 25 kN or more and a retention rate after hexagonal bar abrasion of 70% or more, and hence it is confirmed that the strength and the abrasion resistance are also superior.

### Overall Evaluation

In accordance with the evaluation results shown in Fig. 2, the overall evaluation is represented by "⊚ " since it is understood that the webbings of "example" can be formed into superior seat belts in terms of all the evaluation items, that is, the lightweight properties, the strength, and the abrasion resistance. On the other hand, the level of the webbing for a seat belt of the comparative example is inferior to a desired level, and hence the overall evaluation is represented by "x" since it is understood that when the lightweight properties, the strength, and the abrasion resistance are evaluated in an integrated manner. In particular, since the weight of the webbing for a seat belt of "comparative example" is more than 60 g/m, the lightweight properties thereof are not satisfactory.

As described above, according to this embodiment, a practical seat belt (webbing) having superior lightweight properties, strength, and abrasion resistance and a seat belt device formed by using this seat belt can be provided.

That is, the webbings for a seat belt of "example" which are formed by weaving in this embodiment are totally superior to the webbing of "comparative example" in terms of the lightweight properties, the tensile strength, and the retention rate after hexagonal bar abrasion, and hence the above webbings are effectively used when the weight of a seat belt is reduced while the decrease in strength thereof is suppressed.

In particular, in "example", since the weft yarns (horizontal yarns) are used in which middle shrinking low-melting-point polyester filaments (middle shrinking yarns), which are contracted at a thermal shrinkage rate of 15 to 20 % after being melted under process conditions of 150°C for 30 minutes or more, are blended with high-melting-point polyester filaments, the cross-section of the single yarn material after the shrinkage of the weft yarns (horizontal yarns) is increased, and the rigidity can be increased; hence, corresponding to this increase in rigidity, the weight reduction can be performed by reducing the number of weft yarns. Accordingly, a webbing for a seat belt can be obtained which has a weight of 60g/m or less, a tensile strength of 25 kN or more, and a retention rate after hexagonal bar abrasion of 70% or more, and as a result, a seat belt having both rigidity and lightweight properties can be provided. In addition, the thermal shrinkage rate of filaments, that is, the degree of contraction in the longitudinal direction, can be represented by the following equation, ((length after process - length before process)/length after process)×100, the lengths being obtained before and after the process performed under the above process conditions. By a process method or a measurement method in accordance with, for example, JIS L 1013, the thermal shrinkage rate can be obtained.

In addition, in consideration of the transportation of a passenger restraint belt such as a seat belt, it is desired to form the belt of which the property of a filament yarn is hardly affected by high temperature conditions during transportation. The webbing for a passenger restraint belt of the present invention is effective in forming a seat belt suitable for transportation in which the property of a filament yarn is hardly changed under the high temperature conditions during transportation because the shrinking of the filament yarn for a weft yarn (filament yarns in which high-melting-point polyester and low-melting-point polyester are blended) is limited.

In the present invention, the types of filaments for use as the warp yarns and weft yarns, the process conditions and the like may be optionally changed whenever necessary as long as at least a webbing for a seat belt having a weight of 60g/m or less, a tensile strength of 25 kN or more, and a retention rate after hexagonal bar abrasion of 70% or more is obtained by optionally using middle shrinking synthetic filaments having a thermal shrinkage rate (dimensional shrinkage rate) in the range of 15% to 20% under process conditions of 150°C or more for 180 seconds or more. In the above embodiment, the weft yarns are formed by blending the high-melting-point polyester filaments with the low-melting-point polyester filaments (middle shrinking yarns). However, for example, the types of high-melting-point filaments and low-melting-point filaments, the combination between the high-melting-point filaments and the low-melting-point filaments, and the blending ratio therebetween may be optionally changed whenever necessary.

In the webbings for a seat belt of "example" which are formed by weaving in this embodiment, the warp yarns (vertical yarns) may be formed from a yarn material made of twist yarns or a yarn material made of entangled non-twist yarns. Accordingly, since the entanglement among filaments is increased, and the cohesion is enhanced, the rigidity of the webbing can be further improved. In particular, when the yarn material made of entangled yarns is used, a material cost can be reduced as compared to that in the case in which the yarn material made of twist yarns is used, and as a result, a production cost of the webbing can also be reduced.

In a cross-sectional structure of this type of webbing, the warp yarns are extended to form a curved shape, a so-called "crimping (undulating phenomenon)", in contrast to the weft yarns which are linearly extended. This is a particular phenomenon caused by a weaving method (woven structure) in which weft yarns are woven between warp yarns which are shed alternately. Accordingly, as is the case of the webbings for a seat belt of "example", when the weft density is decreased to 20 picks per inch or less, the degree of meanderings of the curved crimped shape can be decreased, and stress concentrated on curved portions can be alleviated. As a result, in order to simultaneously achieve the increase in strength of webbing and the reduction in weight thereof, the properties can be further improved. In the present invention, when the weft density can be optionally set in the range of 20 picks per inch or less, and when desired webbing properties can be obtained by using middle shrinking synthetic filaments, the weft density may be set to more than 20 picks per inch in some cases.

### Other embodiments

Incidentally, the present invention is not limited to the above embodiment, and various modifications and changes may be performed. For example, the following may be carried out based on the above embodiment.

In the above embodiment, the case is described in which, of the warp yarns (vertical yarns) and the weft yarns (horizontal yarns), only the weft yarns are formed using middle shrinking synthetic filaments. In the present invention, however, only the warp yarns or both the weft yarns and the warp yarns may be formed using middle shrinking synthetic filaments.

In the above embodiment, the case is only described in which, of the warp yarns (vertical yarns) and the weft yarns (horizontal yarns), the warp yarns made of a yarn material which includes entangled non-twist yarns are only used. In the present invention, however, only the weft yarns or both the weft yarns and the warp yarns may be formed using a yarn material made of twist yarns or a yarn material made of entangled non-twist yarns. In addition, according to the present invention, when desired webbing properties are obtained by using middle shrinking synthetic filaments, the warp yarns and the weft yarns may be formed without using a yarn material made of twist yarns or a yarn material made of entangled non-twist yarns.

In addition, in the above embodiment, the seat belt device 100 for a driver of an automobile is described; however, in addition to that, the present invention may be applied to the structure of a seat belt which restrains a passenger in a front passenger seat or in a rear seat and to the structure of a seat belt used in an airplane or a ship besides an automobile.

## Claims

1. A webbing for a passenger restraint belt, which forms a long passenger restraint belt (110) configured to restrain a vehicle passenger (C), comprising:
warp yarns and wefts made of synthetic filaments and woven so as to extend orthogonally to each other, wherein at least either one of the warp yarns and the weft yarns are formed using synthetic filaments composed of first filaments and second filaments, the second filaments being provided in the first filaments and having a melting temperature lower than that of the first filaments, the synthetic filaments are middle shrinking synthetic
filaments which are contracted at a dimensional shrinkage rate of more than 15% and less than 20% after the second filaments are melted under conditions of 150°C or more for 180 seconds or more, and the webbing has a weight of 60g/m or less, a tensile strength of 25 kN or more, and a retention rate after hexagonal bar abrasion of 70% or more.

2. The webbing for a passenger restraint belt, according to Claim 1, wherein the weft density is 20 picks per inch or less.

3. The webbing for a passenger restraint belt, according to Claim 1 or 2, wherein at least either one of the warp yarns and the weft yarns are formed using a filament yarn material made of twist yarns or a filament yam material made of entangled non-twist yarns.

4. A seat belt for restraining a passenger (C), comprising the webbing for a passenger restraint belt (110), according to one of Claims 1 to 3.

5. A seat belt device comprising:
the seat belt (110) according to Claim 4;
a seat belt retractor (101) configured to retract and withdraw the seat belt (110);
a buckle (106) fixed to a vehicle; and
a tongue (104) provided for the seat belt (110) and is engaged with the buckle (106) when the seat belt (110) is worn.

## Patentansprüche

1. Gurtbandgewebe für einen Insassen-Haltegurt, welches einen langen Insassen-Haltegurt (110) ausbildet, welcher dazu ausgestaltet ist, einen Insassen (C) eines Fahrzeugs zu halten, umfassend:
Kettfäden und Einschussfäden, welche aus synthetischen Filamenten ausgebildet sind und derart gewebt sind, dass sie sich orthogonal zueinander erstrecken, wobei die Kettfäden und/oder die Einschussfäden mittels synthetischer Filamente ausgebildet sind, welche aus ersten Filamenten und zweiten Filamenten zusammengesetzt sind, wobei die zweiten Filamente in den ersten Filamenten vorhanden sind und eine Schmelztemperatur aufweisen, welche geringer als diejenige der ersten Filamente ist, wobei die synthetischen Filamente sich in der Mitte zusammenziehende synthetische Filamente sind, welche sich mit einer Größenschrumpfungsrate von mehr als 15 % und weniger als 20 % zusammenziehen, nachdem die zweiten Filamente unter Bedingungen von 150°C oder mehr für 180 Sekunden oder mehr geschmolzen sind, und wobei das Gurtbandgewebe ein Gewicht von 60 g/m oder weniger, eine Zugfestigkeit von 25 kN oder mehr und eine Rückhalterate nach einem Abrieb mit einer sechsseitigen Stange von 70% oder mehr aufweist.

2. Gurtbandgewebe für einen Insassen-Haltegurt nach Anspruch 1, **dadurch gekennzeichnet, dass** die Einschussfadendichte 20 Schuss pro Zoll oder weniger beträgt.

3. Gurtbandgewebe für einen Insassen-Haltegurt nach Anspruch 1 oder 2, **dadurch gekennzeichnet, dass** die Kettfäden und/oder die Einschussfäden mittels eines Filamentgarnmaterials ausgebildet sind, welches aus Zwirn oder einem Filamentgarnmaterial, welches aus einem verflochtenen nicht verzwirnten Garn ausgebildet ist, ausgebildet ist.

4. Sitzgurt zum Halten eines Insassen (C), umfassend das Gurtbandgewebe für einen Insassen-Haltegurt (110) nach einem der Ansprüche 1 bis 3.

5. Sitzgurtvorrichtung umfassend:
den Sitzgurt (110) nach Anspruch 4;
eine Sitzgurt-Aufrollvorrichtung (101), welche derart ausgestaltet ist, dass sie den Sitzgurt (110) aufrollt und abrollt;
ein Gurtschloss (106), welches an einem Fahrzeug befestigt ist; und
eine Zunge (104), welche für den Sitzgurt (110) vorhanden ist und sich mit dem Gurtschloss (106) in Eingriff befindet, wenn der Sitzgurt (110) getragen wird.

## Revendications

1. Une sangle pour une ceinture de retenue de passager, formant une longue ceinture de retenue de passager (110) configurée pour retenir un passager de véhicule (C), comprenant :
des fils de chaîne et des trames faits de filaments synthétiques et tissés de manière à s'étendre perpendiculairement à l'autre, dans lequel au moins les fils de chaîne ou les fils de trame sont formés en utilisant des filaments synthétiques composés de premiers filaments et de deuxièmes filaments, les deuxièmes filaments étant prévus dans les premiers filaments et ayant une température de fusion inférieure à celle des premiers filaments, les filaments synthétiques sont des filaments synthétiques à rétrécissement central qui sont contractés à un taux de retrait dimensionnel supérieur à 15% et inférieur à 20% après que les deuxième filaments sont fondus dans des conditions de 150°C ou plus pendant 180 secondes ou plus, et la sangle a un poids de 60g/m ou moins, une résistance à la traction de 25 kN ou plus, et un taux de rétention après abrasion à barre hexagonale de 70% ou plus.

2. La sangle pour une ceinture de retenue de passager, selon la revendication 1, dans laquelle la densité de trame est de 20 duites par pouce ou moins.

3. La sangle pour une ceinture de retenue de passager, selon la revendication 1 ou 2, dans laquelle au moins les fils de chaîne ou les fils de trame sont formés en utilisant un matériau de fils à filaments fait de fils torsadés ou un matériau de fils à filaments fait de fils non torsadés enchevêtrés.

4. Une ceinture de sécurité pour retenir un passager (C), comprenant la sangle pour une ceinture de retenue de passager (110), selon l'une des revendications 1 à 3.

5. Un dispositif formant ceinture de sécurité comprenant:
la ceinture de sécurité (110) selon la revendication 4 ;
un enrouleur de ceinture de sécurité (101) configuré pour se rétracter et retirer la ceinture de sécurité (110) ;
une boucle (106) fixée à un véhicule ; et
une languette (104) prévue pour la ceinture de sécurité (110) et est mise en prise avec la boucle (106) lorsque la ceinture de sécurité (110) est portée.
